# EUROPÄISCHE PATENTSCHRIFT

(11) **EP 0 619 684 B1**
(45) Veröffentlichungstag und Bekanntmachung des Hinweises auf die Patenterteilung: **02.05.2002**
(21) Anmeldenummer: 94101660.2
(22) Anmeldetag: 03.02.1994
(51) Int. Cl.: H04Q 3/545

(54) **Verfahren zum ferngesteuerten Administrieren von Kommunikationssystemen**
Method for remote controlled administration of communication systems
Procédé pour le contrôle à distance de l'administration de systèmes de communication

(30) Priorität: 26.02.1993 DE 4306031
(43) Veröffentlichungstag der Anmeldung: 12.10.1994
(73) Patentinhaber: SIEMENS AKTIENGESELLSCHAFT, 80333 München (DE)
(72) Erfinder: Weng, Wolfgang, D-81739 München (DE); Wörndle, Friedrich, Dr. phil., D-83104 Ostermünchen (DE)

(56) Entgegenhaltungen:
- EP-A- 0 303 869
- WO-A-92/05485
- 6TH MEDITERRANEAN ELECTROTECHNICAL CONFERENCE, Bd. II, 22.Mai 1991 LJUBLJANA SI, Seiten 1109-1112, XP 000289613 V ZQUEZ ET AL. 'Graphical interface for communication network analysis and simulation'
- ELECTRONICS & COMMUNICATIONS IN JAPAN, PART I - COMMUNICATIONS, Bd. 74, Nr. 4, April 1991 NEW YORK US, Seiten 1-11, XP 000262802 KONDO ET AL. 'Hierarchical service control scheme for Intelligent Network services'
- COMPUTER DESIGN, Bd. 24, Nr. 4, April 1985 LITTLETON US, Seiten 149-154, PROFANT 'Network management simplified through combined functions'
- AT & T TECHNOLOGY, Bd. 6, Nr. 2, 1991 NEW YORK US, Seiten 30-37, XP 000259689 PRIBBLE 'Tools for better network management'

## Beschreibung

Aus 6th Mediterranean Electrotechnical Conference, Bd. II, 22. Mai 1991 Ljubljana Si, Seiten 1109 - 1112, Väzquez et al. "Graphical interface for communication network analysis and simulation" ist ein Tool für die Definition eines Kommunikationsnetzes und der dazugehörigen Attribute bekannt. Hierbei werden mittels eines 'user interfaces' - beispielsweise einer graphischen, auf Windows basierenden Schnittstelle - sowohl Programmodule geschaffen, als auch Attribute in vorhandene Programmodule eingetragen.

Des weiteren ist aus Computer Design, Bd. 24, Nr. 4, April 1985 Littleton US, Seiten 149 - 154, Profant "Network management simplified through combined functions" eine, in Netzknoten eines Netzwerks implementierte Netzwerk Management Einheit bekannt. Die Netzwerk Management Einheit überwacht dabei Netzwerkaktivitäten und übermittelt netzwerk-spezifische Statistiken und Zustände an einen Operator, der die Daten auswerten und dementsprechende Aktionen einleiten kann.

Das Administrieren, d.h. Verwalten, insbesondere der Anschlüsse von Kommunikationssystemen wird bekannterweise durch betriebstechnische Anweisungen bzw. Befehle bewirkt. In diese betriebstechnischen Anweisungen sind betriebstechnische Parameter eingefügt, die jeweils den Bezug zu den zu administrierenden Anschlüssen des Kommunikationssystems bzw. der Teilnehmerrufnummern herstellen. Durch Eingeben mehrerer derartiger betriebstechnischer Anweisungen, beispielsweise über eine Bedieneinrichtung eines Kommunikationssystems, können Teilnehmeranschlüsse bzw. Teilnehmerrufnummern geändert, gelöscht oder neu eingerichtet werden. Die betriebstechnischen Anweisungen werden in dem jeweiligen Kommunikationssystem im Echtzeitmodus, d.h. unmittelbar nach der Eingabe, bearbeitet.

Dies bedeutet, daß keine parallele Bearbeitung von einer oder mehreren betriebstechnischen Anweisungen in mehreren Kommunikationssystemen möglich ist. Aufgrund dieser Echtzeitverarbeitung von betriebstechnischen Anweisungen ist ein ferngesteuertes Administrieren von mehreren Kommunikationssystemen sehr aufwendig.

Die der Erfindung zugrundeliegende Aufgabe ist darin zu sehen, das ferngesteuerte Administrieren von Kommunikationssystemen über ein Kommunikationsnetz zu vereinfachen. Die Aufgabe wird durch die Merkmale des Anspruchs 1 gelöst. Der wesentliche Aspekt des erfindungsgemäßen Verfahrens ist darin zu sehen, daß in einer Netzmanagementzentrale bzw. Bedieneinrichtung eine unterschiedliche Bedieneraufgaben - z. B. Teilnehmer Einrichten, Ändern, usw. - repräsentierende Bedieneraufgabenliste einschließlich vorbereiteter Administrations-Programmodule gespeichert ist. Mit Hilfe einer Abfrageroutine wird aus dieser visualisierten Bedieneraufgabenliste bedieneroberflächengesteuert eine Bedieneraufgabe - z.B. Teilnehmer Ändern - ausgewählt und anschließend werden bedienervorgebbare betriebstechnische Parameter sowie auftragsspezifische Informationen für die zu administrierenden Kommunikationssysteme bedieneroberflächengesteuert abgefragt und in das vorbereitete Administrationsprogrammodul im Sinne des Bildens eines Administrations-Auftragsprogrammoduls eingetragen. Mit Hilfe des erfindungsgemäßen Verfahrens werden folglich Administrations-Auftragsprogrammodule gebildet, die an die jeweiligen Kommunikationssysteme übermittelbar sind und dort den Administrationsprogrammen im Sinne einer Echtzeitverarbeitung zugeführt werden.

Besonders vorteilhaft werden die Bedieneraufgabe, die auftragsspezifischen Informationen über die zu administrierenden Kommunikationssysteme sowie die in die Administrations-Auftragsprogrammodule einzufügenden betriebstechnischen Parameter jeweils durch ein mit Hilfe der Abfrageroutine und von an eine Anzeigeeinrichtung der Bedieneinrichtung gesteuerten Abfragemasken durch bedieneroberflächengesteuerte Eingaben ausgewählt, wobei die Abfragemasken hinsichtlich Bedienerführung derart ausgestaltet sind, daß eine minimale bedieneroberflächengesteuerte Eingabe bewirkt wird - Anspruch 2. Mit Hilfe dieser Abfragemasken ist der Aufwand zum Eingeben der betriebstechnischen Parameter auf ein Minimum reduziert, wobei neben einer Eingabezeitersparnis zusätzlich Fehleingaben vermieden werden.

Gemäß einer vorteilhaften Ausgestaltung des erfindungsgemäßen Verfahrens werden mit Hilfe der Abfrageroutine beim Bilden von Administrations-Auftragsprogrammodulen als auftragsspezifische Informationen eine das zu administrierende Kommunikationssystem bestimmende Kommunikationssysteminformation, eine die jeweilige Bedieneraufgabe definierende Auftragsinformation sowie eine die Art des Administrations-Auftrages bestimmende Auftragsartinformation abgefragt und in einer Auftragsbuchdatei und das zugeordnete Administrations-Auftragsprogrammodul in einem Auftragsdateispeicher der Netzmanagementzentrale gespeichert, wobei durch den Auftragsbuchdatei-Eintrag einer Auftragsverwaltungsroutine das zugeordnete Administrations-Auftragsprogrammodul angezeigt wird - Anspruch 3. Mit Hilfe der Auftragsverwaltungsroutine wird das jeweilige Administrations-Auftragsprogrammodul an das durch die Kommunikationssysteminformationen bestimmte Kommunikationssystem übermittelt und in diesem werden die betriebstechnischen Anweisungen der Administrations-Auftragsprogrammodule den betriebstechnischen Anweisungen interpretierenden und bearbeitenden Administrations-Programmodulen zugeführt. Nach der Bearbeitung der Administrations-Auftragsprogrammodule werden die Bearbeitungsergebnisse über das Kommunikationsnetz an die Netzmanagementzentrale übermittelt und dort gespeichert. Mit Hilfe der in der Auftragsbuchdatei hinterlegten Informationen wird vorteilhaft das Administrations-Auftragsprogrammodul an das zu administrierende Kommunikationssystem übermittelt und dort bearbeitet, d.h. die entsprechenden Änderungen der Kommunikationsanschlüsse bzw. Teilnehmerrufnummern durchgeführt.

In der Netzmanagementzentrale wird mit Hilfe der Auftragsverwaltungsroutine in die Auftragsbuchdatei eine den Bearbeitungsstatus der Administrations-Auftragsprogrammodule anzeigende Statusinformation eingetragen - Anspruch 4. Es wird hierbei ein Bearbeitungsstatus hinsichtlich der Bearbeitung durch die Auftragsverwaltungsroutine angegeben, z.B. das Administrations-Auftragsprogrammodul ist im Auftragsdateispeicher gespeichert und wartet auf die terminierte Übermittlung an ein Kommunikationssystem.

Mit Hilfe der Auftragsartinformation kann der Übermittlungszeitpunkt des jeweiligen Administrations-Auftragsprogrammoduls, die Visualisierung der in der Auftragsbuchdatei eingetragenen Informationen oder die Löschung eines Auftrags oder eine Editierung des Administrations-Auftragsprogrammoduls an der Bedieneroberfläche oder eine die Visualisierung des aktuellen Bearbeitungsstatus bestimmt bzw. bewirkt werden - Anspruch 5. Mit Hilfe der Auftragsartinformation wird folglich im wesentlichen die Bearbeitung oder die Löschung des Auftrags sowie eine Visualisierung der gespeicherten Informationen im Sinne eines Editierens oder Bewertens bewirkt.

Die Änderung der Auftragsbearbeitung oder das Abfragen der eingetragenen Statusinformationen wird durch eine Aktualisierungsmeldung bewirkt, in die eine Auftragsart-, Auftrags- und eine Kommunikationssysteminformation eingetragen ist - Anspruch 6. Hierbei wird bei einer Änderung der Auftragsbearbeitung - z.B. von Auftrag zum nächstmöglichen Zeitpunkt durchführen zu Auftrag löschen - die in der Aktualisierungsmeldung enthaltene Auftragsartinformation anstelle der gespeicherten eintragen, d.h. die vorhandene wird überschrieben.

Gemäß einer weiteren vorteilhaften Ausgestaltung des erfindungsgemäßen Verfahrens werden die in der Abfrageroutine durchzuführenden Aufgaben bzw. Funktionen durch ein Tastaturprogrammodul, ein Textprogrammodul, ein Hilfeprogrammodul, ein Editierprogrammodul, ein Datenverwaltungsprogrammodul, ein Bedieneraufgabenprogrammodul, ein Generierprogrammodul und ein Auftragsprogrammodul realisiert - Anspruch 7. Der Zugriff auf die einzelnen Programmodule wird durch einen programmtechnisch realisierten Softwarebus realisiert. Ein wesentlicher Vorteil dieser Programmodulstruktur ist darin zu sehen, daß einzelne Module mit verhältnismäßig geringem Aufwand hinzufügbar oder entfernbar sind.

Im folgenden wird das erfindungsgemäße Verfahren anhand von vier figürlichen Darstellungen erläutert.

Dabei zeigen
- FIG 1: in einem Blockschaltbild den Aufbau einer Netzmanagementzentrale und eines der zu administrierenden Kommunikationssysteme,
- FIG 2: die programmtechnische Strukturierung der in der Bedieneinrichtung implementierten Abfrageroutine,
- FIG 3: die Strukturierung einer Aktualisierungsmeldung, und
- FIG 4: anhand eines Ablaufdiagrammes das Erstellen von Administrations-Auftragsprogrammodulen und deren Übermitteln und Bearbeiten in Kommunikationssystemen.

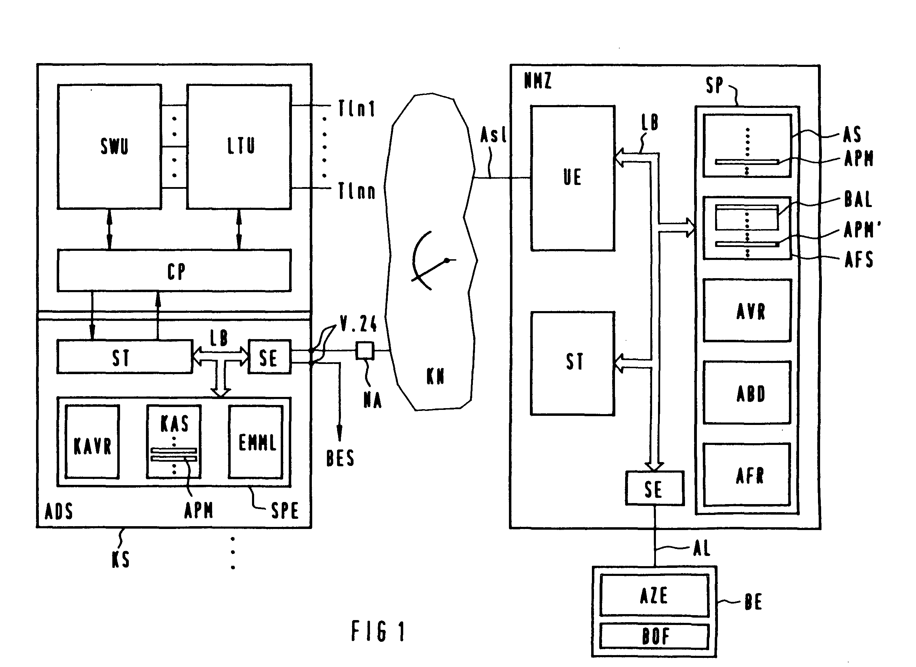

FIG 1 zeigt eine Netzmanagementzentrale NMZ, in der eine beispielsweise durch ein Mikroprozessorsystem realisierte Steuerung ST, eine Übertragungseinrichtung UE, ein Speicher SP und eine Schnittstelleneinrichtung SE angeordnet ist. Diese Komponenten sind durch einen aus Adreß-, Daten- und Steuerleitungen - nicht dargestellt - gebildeten lokalen Bus LB untereinander verbunden. Die Übertragungseinrichtung UE ist bekannterweise derart ausgestaltet, daß beispielsweise Wählverbindungen über ein Kommunikationsnetz KN - beispielsweise das öffentliche Fernsprechnetz - zu Kommunikationssystemen KS aufbaubar sind. Hierzu ist die Übertragungseinrichtung UE über eine Anschlußleitung ASL mit dem öffentlichen Fernsprechnetz KN verbunden.

An die Schnittstelleneinrichtung SE ist über eine Anschlußleitung AL eine Bedieneinrichtung BE angeschlossen. Diese Bedieneinrichtung BE ist beispielsweise durch eine Bildschirmeinrichtung realisiert. Die Bedieneinrichtung BE weist eine üblicherweise als Tastatur realisierte Bedieneroberfläche BOF auf. Des weiteren ist in der Bedieneinrichtung BE eine Anzeigeeinrichtung AZE - üblicherweise ein Bildschirm - angeordnet.

Der Speicher SP in der Netzmanagementzentrale NMZ weist einen Administrations-Auftragsprogrammodule APM speichernden Auftragsdateispeicher AS, einen eine Bedieneraufgabenliste BAL und zugeordnete, vorbereitete Administrations-Programmodule APM' speichernden Abfragespeicher AFS, einen eine Auftragsverwaltungsroutine AVR speichernden Bereich, einen eine Auftragsbuchdatei ABD speichernden Bereich und einen eine programmtechnisch realisierte Abfrageroutine AFR speichernden Bereich auf.

Die Netzmanagementzentrale NMZ ist über das Kommunikationsnetz KN im Sinne des ferngesteuerten Administrierens mit Kommunikationssystemen KS, insbesondere Fernmeldenebenstellenanlagen, verbindbar. Beispielhaft ist in FIG 1 der Aufbau eines der Kommunikationssysteme KS dargestellt. Der vermittlungstechnische Teil des Kommunikationssystems KS ist hierbei durch ein Koppelfeld SWU, durch eine Teilnehmeranschlußeinheit LTU und durch eine zentrale Steuerung CP gebildet. An die Teilnehmeranschlußeinheit LTU sind Teilnehmer TLN1...TLNn bzw. Verbindungen zu öffentlichen Netzen - z.B. öffentliches Fernsprechnetz - anschließbar. Für den Betrieb bzw. die Administration des Kommunikationssystems KS ist an den vermittlungstechnischen Teil ein Betriebs-Administrationsserver ADS angeschlossen. Dessen Steuerung ST ist im Sinne eines Informationsaustausches mit der zentralen Steuerung CP des vermittlungstechnischen Teils verbunden. Die beispielsweise ebenfalls in Mikroprozessortechnik realisierte Steuerung ST ist über einen aus Adreß-, Daten- und Steuerleitungen gebildeten lokalen Bus LB mit einer Schnittstelleneinrichtung SE und einer Speichereinrichtung SPE verbunden. Diese Schnittstelleneinrichtung SE ist über eine Netzanschlußeinrichtung NA - beispielsweise durch die bekannte Modemtechnik realisiert - mit dem Kommunikationsnetz KN verbunden. Als Schnittstelle zwischen der Schnittstelleneinrichtung SE und der Netzanschlußeinrichtung NA ist beispielsweise die bekannte V.24-Schnittstelle V.24 vorgesehen. An diese Schnittstelleneinrichtung SE ist über eine weitere V.24-Schnittstelle V.24 eine Bedieneinrichtung BES im Sinne des Wartens bzw. Betreibens des Kommunikationssystems KS anschließbar. In der Speichereinrichtung SPE sind für die Administrierung des Kommunikationssystems KS eine Administrationsverwaltungsroutine KAVR, ein die Administrations-Auftragsprogrammodule APM speichernder Auftragsdateispeicher KAS sowie ein das Administrations-Auftragsprogrammodul APM interpretierendes Textinterpretermodul EMML angeordnet. Mit Hilfe dieser drei letztgenannten, programmtechnisch realisierten Komponenten wird zusammen mit der Steuerung ST und der zentralen Steuerung CP das Administrieren entsprechend der in den übermittelten Administrations-Auftragsprogrammodulen APM angegebenen betriebstechnischen Anweisungen AMO durchgeführt.

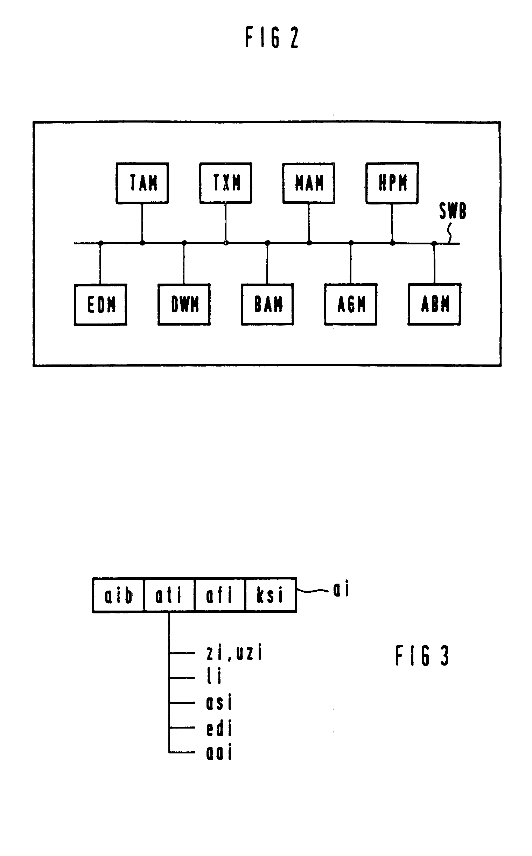

FIG 2 zeigt die programmtechnische Strukturierung der in der Netzmanagementzentrale NMZ implementierten Abfrageroutine AFR. In dieser Abfrageroutine AFR sind folgende Programmodule vorgesehen:
- ein Tastaturprogrammodul TAM, mit dessen Hilfe die an der Bedieneroberfläche, d.h. einer Tastatur, betätigten Bedienelemente, d.h. Tasten, identifiziert und an die Anzeigeeinrichtung AZE gesteuert werden,
- ein Textprogrammodul TXM, mit dessen Hilfe gespeicherte vorgegebene Texte - auch in unterschiedlichen Sprachen - an die Anzeigeeinrichtung AZE gesteuert werden,
- ein Maskenprogrammodul MAM, mit dessen Hilfe gespeicherte Masken BAM, KSM, PAM, AM an die Anzeigeeinrichtung AZE gesteuert werden,
- ein Hilfeprogrammodul HPM, mit dessen Hilfe gespeicherte, einen Bediener informierende und führende Hilfeinformationen an die Anzeigeeinrichtung AZE gesteuert werden,
- ein Editierprogrammodul EDM, mit dessen Hilfe bereits erstellte Administrations-Auftragsprogrammodule APM editiert werden können,
- ein Datenverwaltungsprogrammodul DWM, mit dessen Hilfe eingegebene Kommunikationssystem-, Auftrags- und Auftragsartinformationen ksi, afi, ati sowie die abgefragten betriebstechnischen Parameter p bedieneraufgabenstrukturiert erfaßt und verwaltet werden,
- ein Bedieneraufgabenprogrammodul BAM, in dem eine Liste von aktuell verfügbaren Bedieneraufgaben, d.h. ein vorgegebenes, eine Bedieneraufgabe repräsentierendes Administrations-Programmodul APM', verwaltet wird,
- ein Administrations-Auftragsprogrammodule APM generierendes Generierprogrammodul AGM, und
- ein Auftragsbuchmodul ABM, mit dessen Hilfe die Kommunikationssystem-, Auftrags- und Auftragsartinformation ksi, afi, ati sowie Bearbeitungsstatusinformationen bsi in die Auftragsbuchdatei ABD eingetragen bzw. gelesen werden.

Die einzelnen Programmodule sind über einen programmtechnisch realisierten Softwarebus SWB untereinander verbunden und ansteuerbar.

FIG 3 zeigt eine Aktualisierungsmeldung ai, über die ein bereits vorhandener Eintrag in der Auftragsbuchdatei ABD änderbar ist oder in diesem gespeicherte Bearbeitungsstatusinformationen bsi abrufbar sind. Die Aktualisierungsmeldung ai ist durch eine Information aib bestimmt. Darauf folgt eine Auftragsartinformation ati, durch die die Art der Auftragsbearbeitung definiert ist. Für das Ausführungsbeispiel sind in FIG 3 sechs Auftragsartinformationen ati angegeben, wobei jeweils nur eine dieser Auftragsartinformationen ati in eine Aktualisierungsmeldung ai einfügbar ist. Ist die Auftragsartinformation ati durch eine Zeitinformation zi oder eine Übermittlungszeitinformation uzi repräsentiert, so wird das Administrations-Auftragsprogrammodul APM zum nächstmöglichen Zeitpunkt oder an dem durch die Übermittlungszeitinformation uzi bestimmten Zeitpunkt an das betreffende Kommunikationssystem KS übermittelt. Stellt die Auftragsartinformation ati eine Löschinformation li dar, so wird der Auftrag, d.h. nicht das Administrations-Auftragsprogrammodul APM, gelöscht. Des weiteren ist die Auftragsartinformation ati durch eine Auftragsstatusinformation asi repräsentierbar, wobei durch diese Auftragsstatusinformation asi der jeweilige Bearbeitungszustand des jeweiligen Administrations-Auftragsprogrammoduls APM abrufbar ist. Dies bedeutet, daß die vorhandenen Bearbeitungsstatusinformationen bsi über den Bearbeitungszustand des jeweiligen Administrations-Auftragsprogrammoduls APM an die Anzeigeeinrichtung AZE der Bedieneinrichtung BE übermittelt werden. Die Auftragsartinformation ati ist weiterhin durch eine Editierinformation (edi) darstellbar, wodurch ein Editieren des jeweiligen Administrations-Auftragsprogrammoduls APM möglich ist. Mit Hilfe dieses Editiermodus können durch Editieren vorhandener Administrations-Auftragsprogrammodule APM beliebig neue, völlig unterschiedliche Administrations-Auftragsprogrammodule APM gebildet werden. Des weiteren ist die Auftragsartinformation ati durch eine Auftragsanzeigeinformation aai repräsentierbar, wodurch eine Anzeige der einem Auftrag zugeordneten Informationen an der Anzeigeeinrichtung AZE bewirkt wird.

Die Aktualisierungsmeldung ai weist des weiteren eine Auftragsinformation afi und eine Kommunikationssysteminformation ksi auf. Die Auftragsinformation afi gibt den Auftrag, d.h. die jeweilige, dem Administrations-Auftragsprogrammodul APM zugeordnete Bedieneraufgabe - z.B. Teilnehmer Einrichten - an. Durch die Kommunikationssysteminformation ksi ist das Kommunikationssystem KS bestimmt, an das das gebildete Administrations-Auftragsprogrammodul APM zu übermitteln ist, um dort Teilnehmer beispielsweise einzurichten, d.h. zu administrieren.

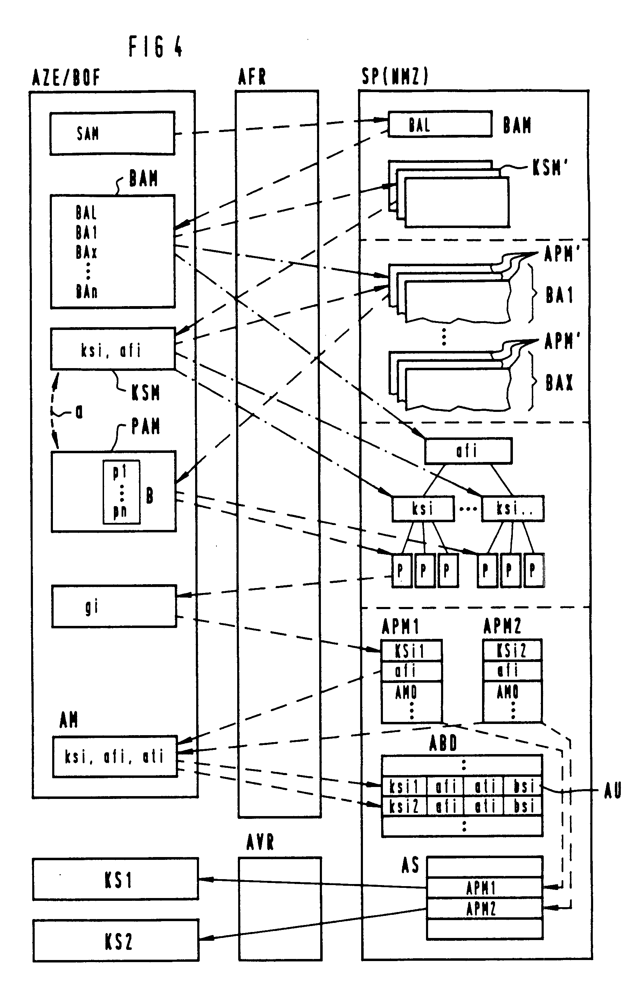

FIG 4 zeigt anhand eines Ablaufdiagrammes das Bilden von Administrations-Auftragsprogrammodulen APM sowie deren Übermittlung an die betreffenden Kommunikationssysteme KS. In der linken Spalte von FIG 4 sind die Bildschirminhalte bzw. Eingabeinformationen der Anzeigeeinrichtung bzw. Bedienoberfläche AZE/BOF und in der rechten Spalte die Speicherinhalte der Speichereinrichtung SP der Netzmanagementzentrale NMZ dargestellt. In der mittleren Spalte sind diejenigen Programmodule angegeben, mit deren Hilfe der Informationsfluß bewirkt wird. Aufgrund einer an der Bedieneroberfläche BOF eingegebenen Startmeldung SAM wird das Bilden eines bzw. mehrerer Administrations-Auftragsprogrammodule APM eingeleitet. Der Informationsfluß zwischen der Anzeigeeinrichtung bzw. Bedieneroberfläche AZE/BOF zur Speichereinrichtung SP mit Hilfe der Programmodule ist durch gestrichelte, strichpunktierte oder strichdoppelpunktierte Linien dargestellt. Aufgrund der eingegebenen Startmeldung SAM wird mit Hilfe der Abfrageroutine AFR eine in der Speichereinrichtung SP gespeicherte Bedieneraufgabenmaske BAM an die Anzeigeeinrichtung AZE gesteuert, in der eine Liste BAL von Bedieneraufgaben BA1...BAn angegeben ist. Mit Hilfe der Bedieneroberfläche BOF, z.B. einer Cursorsteuerung, wird aus dieser Liste BAL der Bedieneraufgaben BA1...BAn eine gewünschte ausgewählt - z.B. digitale Teilnehmer Einrichten. Im Ausführungsbeispiel ist diese Bedieneraufgabe mit BAx bestimmt. Für jede Bedieneraufgabe BA1...BAn ist ein vorbereitetes Administrations-Programmodul APM' in der Speichereinrichtung SP gespeichert. Nach der Auswahl der Bedieneraufgabe BAx wird mit Hilfe der Abfrageroutine AFR aus dem Speicher SP eine Kommunikationssystemmatrix KSM an die Anzeigeeinrichtung AZE der Bedieneinrichtung BE gesteuert. In diese Kommunikationssystemmatrix KSM wird eine Kommunikationssysteminformation ksi und eine Auftragsinformation afi eingetragen. Durch die Kommunikationssysteminformation ksi ist das Kommunikationssystem KS bestimmt, das mit Hilfe des anschließend gebildeten Administrations-Auftragsprogrammoduls APM zu administrieren ist. Durch die Auftragsinformation afi wird die Bedieneraufgabe BAx nochmals angegeben. Nach Eingabe dieser beiden Informationen werden mit Hilfe wiederum der Abfrageroutine AFR die in den vorbereiteten Administrations-Programmodulen APM' eingefügten Parameterabfragemasken PAM an die Anzeigeeinrichtung AZE gesteuert. In diese werden bedieneroberflächengesteuert die betriebstechnischen Parameter p1...pn in den hierfür vorgesehenen Bereich B eingetragen. Mit Hilfe der Abfrageroutine AFR werden diese Parameter p1...pn an den Speicher SP übermittelt und dort jeweils der bereits gespeicherten zugehörigen Kommunikationssysteminformation ksi zugeordnet. Analog zur vorhergehend beschriebenen Eingabeprozedur können in weitere Kommunikationssystemmasken KSM weitere Kommunikationssysteminformationen ksi mit derselben Auftragsinformation afi und die zugehörigen Parameter p1...pn in die entsprechenden Parameterabfragemasken PAM eingetragen und mit Hilfe der Abfrageroutine AFR unter derselben Bedieneraufgabe BA der jeweiligen Kommunikationssysteminformation ksi.. zugeordnete betriebstechnische Parameter p gespeichert werden. Die Speicherung dieser durch die Auftragsinformation afi bestimmten Bedieneraufgabe BAx und der zugeordneten Kommunikationssysteminformationen ksi bzw. betriebstechnischen Parameter p erfolgt in einer Baumstruktur, d.h. einer Bedieneraufgabe sind jeweils die diese Bedieneraufgabe betreffenden Kommunikationssysteme durch die Kommunikationssysteminformation ksi zugeordnet und die relevanten betriebstechnischen Parameter p jeweils den Kommunikationssystemen zugeordnet. Die betriebstechnischen Parameter p stellen hier insbesondere beim Einrichten von digitalen Teilnehmern die betroffenen Teilnehmeranschlüsse der Kommunikationssysteme KS und der für diese vorgesehenen Teilnehmerrufnummern dar. Darüberhinaus sind die betriebstechnischen Parameter p auch durch teilnehmeranschlußmodulbereichkennzeichnende Informationen repräsentiert.

Nach Abschluß der Eingabe der betriebstechnischen Parameter p1...pn wird durch eine bedieneroberflächengesteuerte Eingabe einer Bildungsinformation gi das Bilden von Administrations-Auftragsprogrammodulen APM eingeleitet. Hierbei werden die betriebstechnischen Parameter p in die in den vorbereiteten Administrations-Programmodulen APM' enthaltenen betriebstechnischen Anweisungen AMO eingefügt und für jedes zu administrierende Kommunikationssystem KS1, KS2 ein separates Administrations-Auftragsprogrammodul APM gebildet, wobei durch die eingefügte Auftragsinformation afi die jeweilige Bedieneraufgabe BA definiert ist. Nach dem Bilden der Administrations-Auftragsprogrammodule APM kann durch Eintragen der jeweiligen Kommunikationssysteminformation ksi, der jeweiligen Auftragsinformation afi und einer Auftragsartinformation ati in eine Auftragsmaske AM ein Eintrag dieser Informationen in eine Auftragsbuchdatei ABD bewirkt werden, wobei für jedes Administrations-Auftragsprogrammodul APM ein Auftrag AU gespeichert ist. Mit dem Eintrag in die Auftragsbuchdatei ABD wird das zugeordnete Administrations-Auftragsprogrammodul APM in einen Auftragsdateispeicher AS transferiert und steht dort für eine Übermittlung an das durch die Kommunikationssysteminformationen ksi1, ksi2 bestimmte Kommunikationssystem KS1, KS2 bereit.

Mit der Auftragsartinformation ati kann sowohl der Auftrag zur Übermittlung des jeweiligen Administrations-Auftragsprogrammoduls APM als auch der Übermittlungszeitpunkt bestimmt werden. Entsprechend diesem angegeben Übermittlungszeitpunkt wird mit Hilfe der Auftragsverwaltungsroutine AVR der Netzmanagementzentrale NMZ das zugeordnete Administrations- Auftragsprogrammodul APM an das jeweilige Kommunikationssystem KS1, KS2 übermittelt. Im Ausführungsbeispiel wird das Administrations-Auftragsprogrammodul APM1 bzw. APM2 an das erste bzw. zweite Kommunikationssystem KS1, KS2 übermittelt und, wie in der Beschreibung zu FIG 1 bereits erläutert, dort bearbeitet, d.h. entsprechend der angegebenen betriebstechnischen Anweisungen AMO wird das jeweilige Kommunikationssystem KS1, KS2 administriert.

Durch Übermitteln mehrerer Administrations-Auftragsprogrammodule APM an mehrere Kommunikationssysteme KS kann somit ein annähernd gleichzeitiges ferngesteuertes Administrieren von Kommunikationssystemen KS bewirkt werden, wobei in jedem der Kommunikationssysteme KS die Administrierung durch die entsprechenden Administrationsprogramme in Echtzeit durchgeführt wird.

Mit Hilfe einer in eine Aktualisierungsmeldung ai eingefügte Statusinformation sai ist eine in der Auftragsbuchdatei ABD eingetragene Bearbeitungsstatusinformation bsi abrufbar. Es sind folgende Betriebsstatus abrufbar:
- ein Erfassungsstatus efs, der anzeigt, daß das Administrations-Auftragsprogrammodul APM erfaßt wurde, jedoch liegt kein Auftrag zur Bearbeitung vor,
- ein Wartestatus, der den Wartezustand des jeweiligen Administrations-Auftragsprogrammoduls APM bis zur nächstmöglichen oder einem terminierten Bearbeitungsbeginn anzeigt,
- ein Übermittlungsstatus, der anzeigt, daß das jeweilige Administrations-Auftragsprogrammodul APM an das durch die Kommunikationssysteminformation ksi bestimmte Kommunikationssystem KS übermittelt wurde,
- ein Ausführungsstatus, das das Bearbeitungsende des jeweiligen Administrations-Auftragsprogrammoduls APM anzeigt,
- ein Fehlerstatus fes, durch den ein Fehler während der Bearbeitung des Administrations-Auftragsprogrammoduls APM angezeigt wird,
- ein Ergebnisstatus ers, der das Ergebnis der Bearbeitung des Administrations-Auftragsprogrammoduls APM anzeigt,
- ein Löschstatus, der anzeigt, daß der Auftrag für das zugeordnete Administrations-Auftragsprogrammodul APM gelöscht wurde, und
- ein Vorhandenstatus, der das Vorhandensein eines Administrations-Auftragsprogrammoduls APM im Auftragsdateispeicher AS anzeigt.

## Patentansprüche

1. Verfahren zum Bilden von Administrations-Auftragsprogrammodulen (APM) in einer Netzmanagementzentrale (NMZ), an die eine Bedieneinrichtung (BE) angeschlossen ist und die im Sinne eines ferngesteuerten Administrierens über ein Kommunikationsnetz (KN) mit Kommunikationssystemen (KS) verbindbar ist,
**dadurch gekennzeichnet,**
- **daß** in der Netzmanagementzentrale (NMZ) eine unterschiedliche Bedieneraufgaben repräsentierende Bedienaufgabenliste (BAL) einschließlich zugeordneter, vorbereiteter Administrations-Programmodule (APM') gespeichert sind, und
- **daß** mit Hilfe einer in der Netzmanagementzentrale (NMZ) implementierten Abfrageroutine (AFR) aus der an der Bedieneinrichtung (BE) visualisierten Bedieneraufgabenliste (BAL) eine Bedieneraufgabe (BA) bedieneroberflächengesteuert ausgewählt und bedienervorgebbare betriebstechnische Parameter (p) sowie auftragsspezifische Informationen (ksi, afi, ati) für die zu administrierenden Kommunikationssysteme (KS) bedieneroberflächengesteuert abgefragt und in das vorbereitete Administrations-Programmodul (APM') im Sinne des Bildens eines Administrations-Auftragsprogrammoduls (APM) eingetragen werden.

2. Verfahren nach Anspruch 1,
**dadurch gekennzeichnet,**
**daß** die Bedieneraufgaben (BA), die auftragsspezifischen Informationen (ksi, afi, ati) über die zu administrierenden Kommunikationssysteme (KS) sowie die in die Administrations-Programmodule (APM') einzufügenden betriebstechnischen Parameter (p) jeweils mit Hilfe der Abfrageroutine (AFR) und von an die Bedieneroberfläche der Bedieneinrichtung (BE) gesteuerten Abfragemasken (BAM, KSM, PAM, AM) durch bedieneroberflächengesteuerte Eingaben ausgewählt werden, wobei die Abfragemasken (BAM, KSM, PAM, AM) hinsichtlich Bedienerführung derart ausgestaltet sind, daß eine minimale bedieneroberflächengesteuerte Eingabe bewirkt wird.

3. Verfahren nach Anspruch 1 oder 2,
**dadurch gekennzeichnet,**
- **daß** mit Hilfe der Abfrageroutine (AFR) beim Bilden von Administrations-Auftragsprogrammodulen (APM) als eine der auftragsspezifischen Informationen jeweils
• eine das zu administrierende Kommunikationssystem (KS) bestimmende Kommunikationssysteminformation (ksi),
• eine die jeweilige Bedieneraufgabe definierende Auftragsinformation (afi) sowie
• eine die Art des Administrationsauftrages bestimmende Auftragsartinformation (ati)
abgefragt und in einer Auftragsbuchdatei (ABD) und das zugeordnete Administrations-Auftragsprogrammodul (APM) in einem Auftragsdateispeicher (AS) der Netzmanagementzentrale (NMZ) gespeichert werden, wobei durch den Auftragsbuchdatei-Eintrag einer Auftragsverwaltungsroutine (AVR) das zugeordnete Administrations-Auftragsprogrammodul (APM) angezeigt wird,
- daß die Administrations-Auftragsprogrammodule (APM) mit Hilfe der Auftragsverwaltungsroutine (AVR) an die durch die Kommunikationssysteminformationen (ksi) bestimmten Kommunikationssysteme (KS) übermittelt werden,
- daß in den betreffenden Kommunikationssystemen (KS) betriebstechnische Anweisungen (AMO) der Administrations-Auftragsprogrammodule (APM) den betriebstechnische Anweisungen interpretierenden und bearbeitenden Administrations-Programmodulen (KAVR, EMML) zugeführt werden und
- bei dem die Bearbeitungsergebnisse über das Kommunikationsnetz (KN) an die Netzmanagementzentrale (NMZ) übermittelt und gespeichert werden.

4. Verfahren nach Anspruch 3,
**dadurch gekennzeichnet,**
**daß** in der Netzmanagementzentrale (NMZ) mit Hilfe der Auftragsverwaltungsroutine (AVR) in der Auftragsbuchdatei (ABD) eine den Bearbeitungsstatus der Administrations-Auftragsprogrammodule (APM) anzeigende Statusinformation (SAI) eingetragen wird.

5. Verfahren nach Anspruch 3 oder 4,
**dadurch gekennzeichnet,**
**daß** die Auftragsartinformation (ati) durch
- eine den nächstmöglichen Übermittlungszeitpunkt des jeweiligen Administrations-Auftragsprogrammoduls (APM) bestimmende Zeitinformation (zi) oder durch
- eine den Übermittlungszeitpunkt des jeweiligen Administrations-Auftragsprogrammoduls (APM) bestimmende Übermittlungszeitinformation (uzi) oder durch
- eine die aktuellen Auftragsinformationen (afi, ksi, ati) eines ausgewählten oder mehreret Administrations-Auftrags-programmodule (APM) an einerAnzeigeeinrichtung (AZE) der Bedieneinrichtung (BE) visualisierende Auftragsanzeigeinformation (aai) oder durch
- eine einen Auftrag löschende Löschinformation (li) oder durch
- eine eine Editierung des Administrations-Auftragsprogrammoduls (APM) an der Bedieneroberfläche ermöglichende Editierinformation (edi) oder durch
- eine den aktuellen Bearbeitungsstatus des betreffenden Administrations-Auftragsprogrammoduls (APM) an der Bedieneroberfläche visualisierende Auftragsstatusinformation (asi) repräsentiert ist.

6. Verfahren nach einem der Ansprüche 4 bis 5,
**dadurch gekennzeichnet,**
**daß** durch die in einer Aktualisierungsmeldung (ai) angegebenen Auftragsart-, Auftrags- und Kommunikationssysteminformationen (afi, ati, ksi) die Art der Auftragsbearbeitung durch Eintrag der aktuellen Auftragsartinformation (ati) in die Auftragsbuchdatei (ABD) geändert wird oder die eingetragenen Statusinformationen eines durch die Kommunikationssystem- und Auftragsinformation (ksi, afi) bestimmten Auftrages (AU) abgefragt und visualisiert wird.

7. Verfahren nach Anspruch 5,
**dadurch gekennzeichnet,**
**daß** in der Abfrageroutine (AFR) durch
- ein Tastaturprogrammodul (TAM) die Bedieneroberfläche gesteuert wird,
- ein Textprogrammodul (TXM) vorgegebene gespeicherte Texte an die Anzeigeeinrichtung (AZE) gesteuert werden,
- ein Hilfeprogrammodul (HPM) den Bediener informierende und führende Hilfeinformationen an die Anzeigeeinrichtung (AZE) gesteuert werden,
- ein Editierprogrammodul (EDM) Administrations-Auftragsprogrammodule (APM) editiert werden,
- ein Datenverwaltungsprogrammodul (DWM) die eingegebenen Kommunikationssystem-, Auftrags- und Auftragsartinformationen (ksi, afi, ati) verwaltet werden,
- ein Bedieneraufgabenprogrammodul (BAM) eine Liste (BAL) der verfügbaren Bedieneraufgaben (BA) verwaltet wird,
- ein Generierprogrammodul (AGM) das Generieren von Administrations-Auftragsprogrammodulen (APM), und durch
- ein Auftragsbuchprogrammodul (ABM) das Eintragen und Lesen der Kommunikationssystem-, Auftrags- und Auftragsartinformation (ksi, afi, ati) in der Auftragsbuchdatei (ABD) bewirkt wird.

## Claims

1. Method for forming administration order program modules (APM) in a network management control centre (NMZ) to which an operating device (BE) is connected and which can be connected to communication systems (KS) via a communication network (KN) for the purposes of remote-controlled administration,
**characterized**
- **in that** the network management control centre (NMZ) stores an operating task list (BAL), representing different user tasks, including associated, prepared administration program modules (APM'), and
- **in that** a retrieval routine (AFR) implemented in the network management control centre (NMZ) is used to select, under user interface control, a user task (BA) from the user task list (BAL) visualized on the operating device (BE) and to retrieve, under user interface control, operational parameters (p) which can be prescribed by the user and also order-specific information (ksi, afi, ati) for the communication systems (KS) to be administered and to enter them into the prepared administration program module (APM') for the purposes of forming an administration order program module (APM).

2. Method according to Claim 1,
**characterized**
**in that** the user tasks (BA), the order-specific information (ksi, afi, ati) about the communication systems (KS) to be administered and the operational parameters (p) to be entered into. the administration program modules (APM') are respectively selected using the retrieval routine (AFR) and by retrieval masks (BAM, KSM, PAM, AM) routed to the user interface of the operating device (BE) by means of inputs under user interface control, the user guidance of the retrieval masks (BAM, KSM, PAM, AM) being designed such that the input effected under user interface control is minimal.

3. Method according to Claim 1 or 2,
**characterized**
- **in that**, when forming administration order program modules (APM), the retrieval routine (AFR) is used to retrieve, as one of the order-specific information items,
• a communication-system information item (ksi) determining the communication system (KS) to be administered,
• an order information item (afi) defining the respective user task, and
• an order-type information item (ati) determining the type of administration order
in each case and to store them in an order-book file (ABD) and to store the associated administration order program module (APM) in an order file memory (AS) of the network management control centre (NMZ), the order-book file entry for an order management routine (AVR) displaying the associated administration order program module (APM),
- in that the order management routine (AVR) is used to transmit the administration order program modules (APM) to the communication systems (KS) determined by the communication-system information (ksi),
- in that, in the communication systems (KS) concerned, operational instructions (AMO) of the administration order program modules (APM) are supplied to the administration program modules (KAVR, EMML) which interpret and process operational instructions, and
- in which the processing results are transmitted to the network management control centre (NMZ) via the communication network (KN) and are stored.

4. Method according to Claim 3,
**characterized**
**in that**, in the network management control centre (NMZ), the order management routine (AVR) is used to enter in the order-book file (ABD) a status information item (SAI) displaying the processing status of the administration order program modules (APM).

5. Method according to Claim 3 or 4,
**characterized**
**in that** the order-type information item (ati) is represented by
- a time information item (zi) determining the next possible transmission time of the respective administration order program module (APM), or by
- a transmission-time information item (uzi) determining the transmission time of the respective administration order program module (APM), or by
- an order-display information item (aai) visualizing the current order information (afi, ksi, ati) for a selected or a plurality of administration order program modules (APM) on a display device (AZE) of the operating device (BE), or by
- a deletion information item (li) deleting an order, or by
- an editing information item (edi) permitting editing of the administration order program module (APM) on the user interface, or by
- an order-status information item (asi) visualizing the current processing status of the administration order program module (APM) concerned on the user interface.

6. Method according to one of Claims 4 to 5,
**characterized**
**in that** the order-type, order and communication-system information items (afi, ati, ksi) indicated in an update message (ai) change the type of order processing as a result of entry of the current order-type information item (ati) into the order-book file (ABD) or retrieve and visualize the entered status information for an order (AU) determined by the communication-system and order information items (ksi, afi).

7. Method according to Claim 5,
**characterized in that**, in the retrieval routine (AFR),
- a keyboard program module (TAM) controls the user interface,
- a text program module (TXM) routes prescribed stored texts to the display device (AZE),
- an auxiliary program module (HPM) routes auxiliary information informing and guiding the user to the display device (AZE),
- an editing program module (EDM) edits administration order program modules (APM),
- a data management program module (DWM) manages the entered communication-system, order and order-type information (ksi, afi, ati),
- a user task program module (BAM) manages a list (BAL) of available user tasks (BA),
- a generating program module (AGM) generates administration task program modules (APM), and
- an order-book program module (ABM) enters and reads the communication-system, order and order-type information (ksi, afi, ati) in the order-book file (ABD).

## Revendications

1. Procédé pour former des modules de programme de tâche d'administration (APM) dans une centrale d'administration de réseau (NMZ) à laquelle est relié un dispositif de commande (BE) et qui peut être reliée à des systèmes de communication (KS) par le biais d'un réseau de transmission (KN) afin d'exercer un contrôle à distance de l'administration,
**caractérisé en ce que**
- une liste d'opérations (BAL) représentant différentes opérations est mise en mémoire, avec également des modules de programme d'administration préparés (APM') associés, dans la centrale d'administration de réseau (NMZ) et
- **en ce qu'**une opération (BA) est sélectionnée dans la liste d'opérations (BAL) visualisée sur le dispositif de commande (BE) à l'aide d'une routine d'interrogation (AFR) misé en oeuvre dans la centrale d'administration de réseau (NMZ), cette sélection étant commandée depuis le pupitre de commande, et des paramètres d'exploitation (p) pouvant être prédéfinis par l'opérateur sont appelés ainsi que des informations (ksi, afi, ati) spécifiques aux tâches pour les systèmes de communication (KS) à administrer, cet appel étant commandé depuis le pupitre de commande, lesquels paramètres et informations sont enregistrés dans le module de programme d'administration préparé (APM') dans le but de créer un module de programme de tâche d'administration (APM).

2. Procédé selon la revendication 1, **caractérisé en ce que** les opérations (BA), les informations spécifiques aux tâches (ksi, afi, ati) concernant les systèmes de communication (KS) à administrer, ainsi que les paramètres d'exploitation (p) à insérer dans les modules de programme d'administration (APM'), sont sélectionnés à chaque fois à l'aide de la routine d'interrogation (AFR) et de masques d'interrogation (BAM, KSM, PAM, AM) adressés au pupitre de commande du dispositif de commande (BE), grâce à des données dont l'entrée est commandée depuis le pupitre de commande, les masques d'interrogation (BAM, KSM, PAM, AM) étant exécutés, pour ce qui est de la conduite de l'opérateur, de manière à avoir un minimum de données à entrer depuis le pupitre de commande.

3. Procédé selon l'une des revendications 1 ou 2, **caractérisé**
- **en ce que** l'on compte à chaque fois, parmi les informations appelées à l'aide de la routine d'interrogation (AFR), en tant qu'informations spécifiques aux tâches, lors de la création des modules de programme de tâche d'administration (APM),
• une information sur le système de communication (ksi) qui détermine le système de communication (KS) à administrer,
• une information sur la tâche (afi) qui définit l'opération respective, et
• une information sur le type de tâche (ati) qui détermine le type de la tâche d'administration,
lesquelles informations sont mémorisées dans un dossier de tâches (ABD) et le module de programme de tâche d'administration (APM) associé est mémorisé dans une mémoire fichier de tâches (AS) de la centrale d'administration de réseau (NMZ), l'entrée d'une routine de gestion de tâche (AVR) dans le dossier de tâches indiquant le module de programme de tâche d'administration (APM) associé,
- en ce que les modules de programme de tâche d'administration (APM) sont transférés, à l'aide de la routine de gestion de tâche (AVR), aux systèmes de communication (KS) déterminés par les informations sur le système de communication (ksi),
- en ce que, dans les systèmes de communications (KS) concernés, les instructions d'exploitation (AMO) des modules de programme de tâche d'administration (APM) alimentent les modules de programme d'administration (KAVR, EMML) qui interprètent et traitent les instructions d'exploitation, et
- dans lequel les résultats du traitement sont communiqués, par le biais du réseau de transmission (KN), à la centrale d'administration de réseau (NMZ) où ils sont mis en mémoire.

4. Procédé selon la revendication 3, **caractérisé en ce que**, dans la centrale d'administration de réseau (NMZ), une information d'état (SAI) indiquant l'état de traitement des modules de programme de tâche d'administration (APM) est enregistrée dans le dossier de tâches (ABD) à l'aide de la routine de gestion de tâche (AVR).

5. Procédé selon la revendication 3 ou 4, **caractérisé en ce que** l'information sur le type de tâche (ati) est représentée par
- une information de temps (zi) qui détermine, pour le module de programme de tâche d'administration (APM) respectif, l'instant de transfert qui suit immédiatement, ou par
- une information sur le moment de transfert (uzi) qui détermine le moment de transfert du module de programme de tâche d'administration (APM) respectif, ou par
- une information d'affichage de tâche (aai) qui visualise sur un dispositif d'affichage (AZE) du dispositif de commande (BE) les informations actuelles sur la tâche (afi, ksi, ati) d'un module de programme de tâche d'administration (APM) ou de plusieurs de ces modules, ou par
- une information d'annulation (li) qui annule une tâche, ou par
- une information d'édition (edi) qui permet une édition du module de programme de tâche d'administration (APM) sur le pupitre de commande, ou par
- une information sur l'état de la tâche (asi) qui visualise l'état de traitement actuel du module de programme de tâche d'administration (APM) concerné sur le pupitre de commande.

6. Procédé selon l'une des revendications 4 à 5, **caractérisé en ce que**, grâce aux informations sur le type de tâche, sur la tâche et sur le système de communication (afi, ati, ksi) indiquées dans un message d'actualisation (ai), le type de traitement de la tâche est modifié par l'enregistrement des informations actuelles sur le type de tâche (ati) dans le dossier de tâches (ABD), ou les informations d'état enregistrées d'une tâche (AU) déterminée par l'information sur le système de communication et sur la tâche (ksi, afi) sont appelées et visualisées.

7. Procédé selon la revendication 5, **caractérisé en ce que**, dans la routine d'interrogation (AFR),
- le pupitre de commande est commandé grâce à un module de programme de clavier (TAM),
- des textes mémorisés prédéfinis sont adressés au dispositif d'affichage (AZE) grâce à un module de programme de texte (TXM),
- des informations d'aide qui informent et guident l'opérateur sont adressées au dispositif d'affichage (AZE) grâce à un module de programme d'aide (HPM),
- des modules de programme de tâche d'administration (APM) sont édités grâce à un module de programme d'édition (EDM),
- les informations entrées sur le système de communication, sur la tâche et sur le type de tâche (ksi, afi, ati) sont gérées grâce à un module de programme de gestion de données (DWM),
- une liste (BAL) des opérations (BA) disponibles est gérée grâce à un module de programme d'opérations (BAM),
- la génération de modules de programme de tâche d'administration (APM) est déterminée par un module de programme générateur (AGM), et
- l'enregistrement et la lecture de l'information sur le système de communication, sur la tâche et sur le type de tâche (ksi, afi, ati) dans le dossier de tâches (ABD) sont le fait d'un module de programme de dossier de tâches (ABM).
